# FASCICULE DE BREVET EUROPEEN

(11) **EP 3 781 793 B1**
(45) Date de publication et mention de la délivrance du brevet: **04.06.2025**
(21) Numéro de dépôt: 19772778.7
(22) Date de dépôt: 17.04.2019
(51) Int. Cl.: F01D 5/28, F01D 9/04, F01D 25/24

(54) **DISTRIBUTEUR EN CMC AVEC REPRISE D'EFFORT**
KERAMISCHER LEITSCHAUFELRING ZUM KRAFTAUFNAHME
LOAD-BEARING CMC NOZZLE DIAPHRAGM FOR FORCE ABSORPTION

(30) Priorité: 17.04.2018 FR 1853345
(43) Date de publication de la demande: 24.02.2021
(73) Titulaire: SAFRAN AIRCRAFT ENGINES, 75015 Paris (FR)
(72) Inventeur: QUENNEHEN, Lucien, Henri, Jacques, 77550 MOISSY-CRAMAYEL (FR); DANIS, Antoine, Claude, Michel, Etienne, 77550 MOISSY-CRAMAYEL (FR); DUFFAU, Clément, Jean, Pierre, 77550 MOISSY-CRAMAYEL (FR); JARROSSAY, Clément, 77550 MOISSY-CRAMAYEL (FR); TABLEAU, Nicolas, Paul, 77550 MOISSY-CRAMAYEL (FR)
(74) Mandataire: Cabinet Beau de Loménie
(86) Numéro de dépôt international: PCT/FR2019/050914
(87) Numéro de publication internationale: WO 2019/202259

(56) Documents cités:
- EP-A1- 3 009 601
- WO-A1-2012/146875
- WO-A1-2013/079859
- FR-A1- 2 973 435
- US-A- 4 396 349
- US-A- 6 164 903

## Description

### Arrière-plan de l'invention

L'invention concerne des turbomachines, notamment des turbomoteurs aéronautiques ou des turbines industrielles, et plus particulièrement un étage distributeur de turbine en matériau composite à matrice céramique ou à matrice au moins partiellement en céramique, désigné ci-après par matériau CMC.

Le domaine d'application de l'invention est notamment celui des moteurs aéronautiques à turbine à gaz. L'invention est toutefois applicable à d'autres turbomachines, par exemple des turbines industrielles.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique noté CMC par la suite.

Les matériaux CMC sont typiquement formés d'un renfort fibreux en fibres réfractaires, telles que des fibres de carbone ou de céramique, densifié par une matrice en céramique ou au moins partiellement en céramique.

Ces matériaux possèdent des propriétés thermo-structurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de roues mobiles de turbomachines en CMC à plate-forme et talon intégrés. L'utilisation de matériaux CMC pour des distributeurs de turbine a aussi été proposée, notamment dans les documents WO 2010/146288, FR 2 979 662 et EP 2 443 318.

Un étage distributeur de turbine métallique traditionnel présente une forme de couronne composée de plusieurs secteurs assemblés, chaque secteur comprenant une plateforme intérieure, une plateforme extérieure et une pluralité de pales s'étendant entre les plateformes intérieure et extérieure et solidaires de celles-ci. Les plateformes intérieures juxtaposées forment une virole intérieure et les plateformes extérieures juxtaposées forment une virole extérieure. Les viroles intérieure et extérieure délimitent la veine d'écoulement de gaz dans l'étage distributeur.

Introduire un étage distributeur, par exemple un étage distributeur haute pression, en CMC permet d'augmenter la température maximale tolérée par rapport à un étage distributeur métallique, et ainsi de diminuer la quantité d'air de refroidissement utilisée. Cela permet ainsi d'augmenter les performances de la turbomachine.

Toutefois, le CMC, par ses propriétés très différentes du métal est plus sensible à certaines contraintes mécaniques. En effet le CMC présente une plus grande rigidité et une plus faible dilatation. Il se comporte mieux en compression, mais ses contraintes admissibles en traction sont plus faibles que celles du métal.

De plus, l'intégration dans un environnement métallique d'une pièce en CMC est délicate en raison des dilatations thermiques différentielles entre le CMC et le métal. Cela est d'autant plus délicat dans une turbomachine, et plus particulièrement dans une partie à haute pression de la turbomachine, car l'environnement est très chaud, ce qui augmente les différences de coefficients de dilatation thermique entre les matériaux, les efforts aérodynamiques subis par un étage distributeur haute pression étant en outre très élevés dans cette zone de turbine.

Il est connu des étages distributeurs en CMC comme par exemple un étage distributeur de turbine comportant une virole externe de support solidaire d'un carter, une virole interne de support, et une pluralité de secteurs d'anneau en CMC formant une couronne s'étendant entre la virole externe de support et la virole interne de support. Chaque secteur d'anneau est en appui sur les viroles interne et externe de support et comporte une plateforme intérieure, une plateforme extérieure, et au moins une pale s'étendant entre la plateforme extérieure et la plateforme intérieure et solidaire de celles-ci.

Toutefois, il existe un besoin d'améliorer les solutions connues en ce qui concerne la solidarisation déterministe du secteur d'anneau en CMC avec la virole interne, notamment en termes de maintien au moins axial du secteur d'anneau et en termes de reprise des efforts aérodynamiques.

Par ailleurs, un important différentiel de pressions est exercé sur le carter sous l'étage distributeur dans la direction radiale. Ce carter sert à créer une étanchéité entre le rotor et le stator. Cet écart de pression est source d'un effort qui, s'il était exercé sur le CMC, serait trop élevé compte tenu des admissibles du matériau.

Il est connu également un étage distributeur tel que décrit ci-dessus et comportant en outre un mât de renforcement s'étendant radialement à l'intérieur des aubes entre les deux plateformes.

Cependant, une telle solution reprend aussi bien via le mât les efforts relatifs au différentiel de pression sous l'étage distributeur que les efforts aérodynamiques sur la couronne en CMC. Il existe donc un besoin d'améliorer le maintien déterministe de la pièce en CMC de cette solution.

Il est connu du document FR 2 973 435 une turbine selon le préambule de la revendication 1. Il est également connu des turbines selon les documents WO 2013/079859, EP 3009601 et WO 2012/146875.

### Objet et résumé de l'invention

L'invention vise à pallier les inconvénients mentionnés ci-dessus et à passer outre les difficultés mentionnées ci-dessus en proposant une turbine de turbomachine comprenant un étage distributeur de turbine au moins en partie en CMC dont le montage est simplifié et adapté pour maintenir les secteurs d'anneau de façon déterministe tout en permettant au secteur d'anneau de se déformer indépendamment des pièces métalliques en interface.

Un objet de l'invention propose une turbine de turbomachine comprenant un carter et un étage distributeur de turbine, l'étage distributeur de turbine comportant une virole externe de support en métal et solidaire du carter, une virole interne de support en métal, et une pluralité de secteurs d'anneau en matériau composite à matrice céramique formant une couronne s'étendant entre la virole externe de support et la virole interne de support et présentant une virole intérieure et une virole extérieure formant entre elles une veine d'écoulement de fluide, la couronne définissant une direction axiale et une direction radiale. Chaque secteur d'anneau a une plateforme intérieure formant une partie de la virole intérieure, une plateforme extérieure formant une partie de la virole extérieure, et au moins une pale s'étendant entre la plateforme extérieure et la plateforme intérieure, ladite au moins une pale étant solidaire des plateformes extérieure et intérieure. La plateforme extérieure de chaque secteur comprend une première portion dotée d'une face interne formant la surface externe de la veine d'écoulement de fluide, et une seconde portion radialement distante et externe à la première portion, la seconde portion de la plateforme extérieure étant fixée à la virole externe de support.

Selon une caractéristique générale de l'invention, la plateforme intérieure comprend une première patte s'étendant selon la direction radiale en saillie vers l'intérieur depuis une extrémité axiale amont de la plateforme intérieure, et la virole interne de support comprend un épaulement s'étendant en saillie dans la direction radiale vers l'extérieur, l'épaulement étant positionné en amont de la première patte et en butée dans la direction axiale contre ladite première patte.

La fixation du secteur d'anneau en CMC à la virole externe de support en métal permet de reprendre les efforts des gaz s'exerçant sur la pale et les plateformes. Ce système, qui comprend ainsi une fixation radiale du secteur d'anneau en CMC à une virole métallique externe de support ainsi qu'un maintien axial à un élément de la structure de support comprenant la virole externe et la virole interne, permet ainsi d'avoir un maintien déterministe du distributeur sur le carter, ce qui permet de mieux maîtriser le positionnement et les déplacements, et donc, les jeux, cruciaux pour la performance du moteur.

Dans un premier aspect de la turbine, la turbine peut en outre comprendre au moins un renfort disposé selon la direction radiale entre la première portion et la seconde portion de la plateforme extérieure, ledit au moins un renfort comprenant une première paroi en appui contre une face radialement externe de la première portion et une seconde paroi en appui contre une face radialement interne de la seconde portion, au moins un renfort étant fixé à la virole externe de support avec la seconde portion de la plateforme extérieure.

La région s'étendant radialement entre la première portion et la seconde portion est la plus sollicitée mécaniquement, le bras de levier des efforts de pression y étant maximal. Le renfort forme un épaississement de la plateforme dans cette région ce qui permet de la rigidifier et d'abaisser les contraintes qui y sont exercées.

Dans un deuxième aspect de la turbine, la seconde portion de la plateforme extérieure peut être fixée à la virole externe de support à l'aide d'au moins un ensemble comprenant une vis et un écrou, la vis traversant la plateforme extérieure du secteur et la virole externe de support

Dans un troisième aspect de la turbine, la seconde portion de la plateforme extérieure de chaque secteur peut comprendre au moins un élément de butée en rotation et la virole externe de support peut comprendre au moins un élément complémentaire de butée en rotation configuré pour coopérer avec un élément de butée en rotation de la plateforme extérieure.

La butée en rotation permet ainsi de faciliter le positionnement et l'assemblage de l'étage distributeur et de reprendre le moment autour de l'axe radial.

La butée en rotation peut être formée par un orifice dans la seconde portion de la plateforme extérieure de chaque secteur et, pour chaque orifice de plateforme extérieure, un ergot de centrage s'étendant radialement en saillie vers l'intérieur depuis la virole métallique externe, les ergots de centrage étant configurés pour coopérer chacun avec un orifice de plateforme extérieure pour maintenir le secteur en position dans une direction axiale et une direction circonférentielle de l'étage distributeur.

Dans une variante, la butée en rotation peut être formée par une encoche prévue dans la seconde portion de la plateforme extérieure de chaque secteur d'anneau et une butée s'étendant radialement en saillie vers l'intérieur depuis la virole métallique externe et configurée pour coopérer avec une desdites encoches.

Dans un quatrième aspect de la turbine, la première portion de la plateforme extérieure peut comprendre une partie s'étendant en saillie vers l'extérieur dans la direction radiale depuis une extrémité amont de la plateforme extérieure.

Ladite partie radiale permet ainsi d'améliorer l'étanchéité de la veine d'écoulement de fluide.

Dans un cinquième aspect de la turbine, ladite au moins une pale de chaque secteur d'anneau présente un profil creux définissant un logement interne s'étendant entre la plateforme intérieure et la plateforme extérieure, les plateformes intérieure et extérieure de chaque secteur d'anneau présentent chacune un orifice communiquant avec ledit logement interne de ladite au moins une pale, et chaque secteur d'anneau de l'étage distributeur comprend au moins un mât traversant lesdits orifices des plateformes et le logement interne de ladite au moins une pale, ledit mât étant fixé audit carter et en liaison avec ledit secteur d'anneau et ladite virole interne de support, la liaison pouvant être directe ou indirecte.

Comme évoqué plus haut, une difficulté supplémentaire est générée par le différentiel de pression entre l'amont et l'aval de la plateforme intérieure de l'étage distributeur et du carter qui y est rattaché. Ce carter sert à créer une étanchéité entre le rotor et le stator. La différence de pression peut atteindre une valeur entre 2 à 50 bars. Cela crée un effort important qui est une source de contraintes importantes, notamment dans la zone d'accroche, en générant un moment via le bras de levier qu'est la pale. Cet écart de pression est source d'un effort qui, s'il était exercé sur le CMC, serait trop élevé compte tenu des admissibles du matériau.

Le mât permet de fournir un moyen de fixation d'un secteur d'anneau d'un étage distributeur en CMC par le haut, c'est-à-dire au carter, tout en minimisant le moment de flexion, dans la mesure où la longueur de flexion est diminuée de moitié environ de par le mât traversant le secteur annulaire, l'effort étant déjà fortement réduit de par le fait que l'étage distributeur selon l'invention ne reprend pas l'effort lié à la différence de pression sur la virole interne.

Chaque secteur d'anneau de l'étage distributeur est ainsi maintenu de façon déterministe, c'est-à-dire de manière à éviter que le secteur d'anneau se mette à vibrer et en maîtrisant sa position, et cela tout en permettant au secteur d'anneau de se déformer sous les effets de la température et de la pression entre autre indépendamment des pièces métalliques en interface.

La turbine selon l'invention permet ainsi d'avoir un étage distributeur reprenant les efforts de différentiel de pression en veine sur la pale non pas par les éléments en CMC, mais par le mât métallique qui bénéficie d'un meilleur admissible que les éléments en CMC.

Dans un sixième aspect de la turbine, le mât peut comprendre au moins une portion en saillie s'étendant dans un plan transverse à la direction radiale selon laquelle le mât s'étend et en liaison avec la pale pour maintenir la pale en position.

Le manchon définit une rotule permettant de minimiser l'effort dû au moment aérodynamique sans modifier l'intégration du secteur d'anneau dans la turbine. En effet, la rotule ainsi formée à l'intérieur de la pale laisse la pale libre de ses mouvements autour de l'axe définit par le mât.

Dans un septième aspect de la turbine, la plateforme intérieure de chaque secteur peut comprendre en outre une seconde patte radiale s'étendant en saillie dans la direction radiale vers l'intérieur depuis une extrémité aval de la plateforme intérieure, la plateforme intérieure étant fixée à la virole interne de support par pincement des première et seconde pattes radiales de la plateforme intérieure dans la direction axiale entre ledit épaulement de la virole interne de support et une pince comportant deux mâchoires s'étendant dans la direction radiale vers l'extérieur et maintenues en contrainte l'une vers l'autre contre la seconde patte radiale de la plateforme intérieure.

Dans une variante, la virole interne de support peut comprendre une couronne perforée comportant des orifices de réception d'une extrémité du mât, et une bague de maintien sur laquelle est montée la couronne.

Dans un huitième aspect de la turbine, le mât peut être creux et comprendre des perforations sur toute sa hauteur pour délivrer un flux d'air de refroidissement, le flux d'air étant acheminé à l'intérieur du mât depuis le carter.

Le mât peut être en matériau métallique de manière à offrir une bonne tenue mécanique, le mât reprenant tous les efforts aérodynamiques pour les transférer au carter.

Le mât peut être réalisé en tout autre matériau.

Chaque secteur d'anneau peut comprendre une pluralité de pales dont au moins une comprend un mât.

Dans un neuvième aspect de la turbine, la seconde portion de la plateforme extérieure, la pale et la première patte de la plateforme intérieure sont formées en une seule et même pièce de tissage de matériau composite à matrice céramique ce qui permet de renforcer la structure du secteur d'anneau.

L'invention a également pour objet, une turbomachine comprenant au moins une turbine de turbomachine telle que définie ci-dessus.

L'invention a aussi pour autre objet, un aéronef comprenant au moins une turbomachine tel que défini ci-dessus.

### Brève description des dessins.

L'invention sera mieux comprise à la lecture faite ci-après, à titre indicatif mais non limitatif, en référence aux dessins annexés sur lesquels :
- La figure 1 est une vue schématique d'un secteur d'anneau d'un étage distributeur dans un plan défini par la direction radiale et la direction axiale de l'anneau selon un premier mode de réalisation de l'invention ;
- La figure 2 présente une vue en coupe du secteur d'anneau de la figure 1 dans un plan défini par la direction axiale et la direction circonférentielles de l'étage distributeur ;
- La figure 3 présente une vue schématique en coupe du secteur d'anneau de la figure 1 dans un plan défini par la direction radiale et la direction axiale ;
- la figure 4 est une vue schématique éclatée du secteur d'anneau de la figure 1 ;
- la figure 5 est une vue schématique d'un secteur d'anneau d'un étage distributeur dans un plan défini par la direction radiale et la direction axiale de l'anneau selon un second mode de réalisation de l'invention ;
- La figure 6 présente une vue en coupe du secteur d'anneau de la figure 5 dans un plan défini par la direction axiale et la direction circonférentielle de l'étage distributeur ;
- La figure 7 présente une vue schématique en coupe du secteur d'anneau de la figure 5 dans un plan défini par la direction radiale et la direction axiale ;
- la figure 8 est une vue schématique éclatée du secteur d'anneau de la figure 5.

### Description détaillée de modes de réalisation

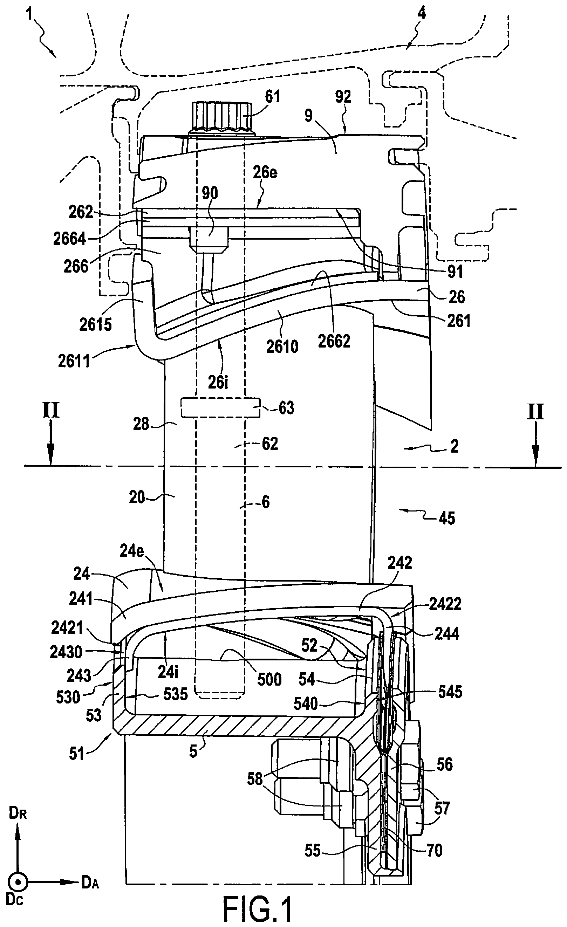

Sur la figure 1 est illustrée une vue schématique d'un secteur d'anneau d'un étage distributeur dans un plan défini par la direction radiale et la direction axiale de l'étage distributeur selon un premier mode de réalisation de l'invention.

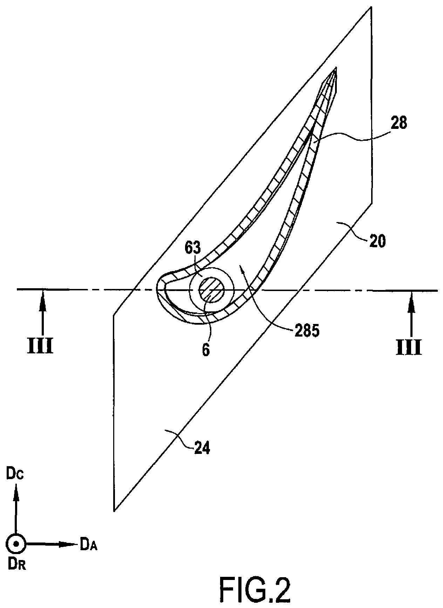

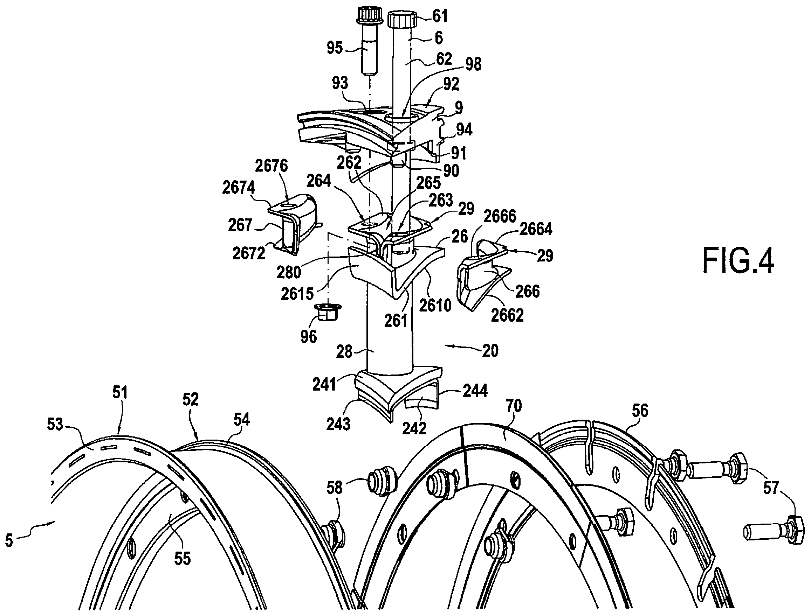

Les figures 2 à 4 présentent respectivement une vue en coupe dans un plan défini par la direction axiale et la direction circonférentielle, une vue schématique en coupe dans un plan défini par la direction radiale et la direction axiale et une vue schématique éclatée du secteur d'anneau de la figure 1.

Une turbine 1 haute pression d'une turbomachine, par exemple un turbomoteur aéronautique, telle que montrée partiellement sur la figure 1, comprend une pluralité d'étages distributeurs fixes 2 qui alternent avec des roues mobiles dans le sens d'écoulement, indiqué par une flèche sur la figure 1, du flux gazeux F dans la turbine 1 et qui sont montés dans un carter 4 de turbine.

Chaque roue mobile comprend une pluralité d'aubes ayant une virole intérieure, et au moins une pale s'étendant depuis la virole intérieure et liée à celle-ci. Du côté intérieur de la virole intérieure, l'aube se prolonge par un pied engagé dans un logement d'un disque. Du côté extérieur, le sommet des aubes est en regard d'un matériau abradable porté par un anneau pour assurer l'étanchéité aux sommets des aubes.

Dans tout le présent texte, les termes « intérieur » ou « interne » et « extérieur » ou « externe » sont utilisés en référence à la position ou l'orientation par rapport à l'axe de rotation de la turbine 1 qui définit la direction axiale D_{A} de la turbine 1.

Les aubes de la roue mobile peuvent être des aubes métalliques traditionnelles ou des aubes en matériau CMC obtenues par exemple comme décrit dans les documents WO 2010/061140, WO 2010/116066, WO 2011/080443.

Au moins l'un des étages distributeurs 2 de la turbine 1 est formé par réunion de plusieurs secteurs d'anneau 20 en matériau CMC pour former un anneau complet. La flèche D_{A} indique la direction axiale de l'étage distributeur 2 tandis que la flèche D_{R} indique la direction radiale de l'étage distributeur 2.

Chaque secteur 20 d'anneau de l'étage distributeur 2 comprend une plateforme intérieure 24, une plateforme extérieure 26 et une pale 28 s'étendant entre les plateformes intérieure et extérieure 24 et 26 et solidaires de celles-ci. En variante, plusieurs pales pourraient s'étendre entre les plateformes intérieure et extérieure d'un même secteur de distributeur. Une fois assemblés avec le carter 4 de la turbine 1, les secteurs 20 forment une unique couronne de distributeurs 2 présentant une virole intérieure formée par la juxtaposition des plateformes intérieures 24 des secteurs 20 et une virole extérieure formée par la juxtaposition des plateformes extérieures 26 des secteurs 20.

La virole intérieure et la virole extérieure forment entre elles une veine 45 d'écoulement de fluide à l'intérieur de laquelle le flux gazeux F s'écoule lors du fonctionnement de la turbine 1.

Dans tout le texte, les termes « amont » et « aval » sont utilisés en référence au sens d'écoulement de flux gazeux F dans la veine 45 indiqué par une flèche.

Les plateformes intérieures 24 formant la virole intérieure de l'étage distributeur 2 comprennent chacune une première portion 241 et une seconde portion 242 en contact l'une de l'autre et solidaires du secteur d'anneau 20. Les première et seconde portions 241 et 242 peuvent être moulées ensemble ou bien tissées ensemble ou bien solidarisées ensemble différemment lors de la consolidation par voie gazeuse ou lors de l'opération d'infiltration dite de « Melt Infiltration » en anglais du secteur d'anneau et correspondant à une remontée de silicium par voie liquide grâce à la capillarité au sein du textile.

Les plateformes intérieures 24 présentent chacune une surface extérieure 24e destinée à être en contact avec le flux gazeux F et formée par la surface de la première portion 241 des plateformes intérieures 24 orientée radialement vers l'extérieur, et donc disposée radialement en regard des plateformes extérieures 26 formant la virole extérieure. Les plateformes intérieures 24 présentent en outre une surface intérieure 24i disposée en regard de l'axe de rotation de la turbine 1, et formée par la surface de la seconde portion 242 des plateformes intérieures 24 orientée radialement vers l'intérieure.

Les plateformes extérieures 26 comprennent chacune une première portion 261 et une seconde portion 262 solidaires du secteur d'anneau 20. Les première et seconde portions 261 et 262 des plateformes extérieures 26 peuvent être moulées ou tissées ou bien solidarisées avec le secteur d'anneau 20 lors de sa conception. Les plateformes extérieures 26 présentent chacune une surface extérieure 26e disposée en regard du carter 4 et formée par la surface de la seconde portion 262 des plateformes extérieures 26 orientée radialement vers l'extérieure. Les plateformes extérieures 26 présentent en outre une surface intérieure 26i destinée à être en contact avec le flux gazeux F et formée par la surface de la première portion 261 des plateformes extérieures 26 orientée radialement vers l'intérieure, et donc disposée radialement en regard des plateformes intérieures 24 formant la virole intérieure et en regard de l'axe de rotation de la turbine 1.

Les secteurs 20 formant l'étage distributeur 2, la plateforme intérieure 24 de chaque secteur 20 présente donc une portion de la surface extérieure et une portion de la surface intérieure de la virole extérieure, et la plateforme extérieure 26 de chaque secteur 20 présente également une portion de la surface extérieure et une portion de la surface intérieure de la virole intérieure. La pale 28 de chaque secteur 20 s'étend entre la surface extérieure 24e de la plateforme intérieure 24 du secteur d'anneau 20 et la surface intérieure 26i de la plateforme extérieure 26 du secteur d'anneau 20, et une extension 280 de la pale 28 s'étend également entre la première portion 261 et la seconde portion 262 de la plateforme extérieure 26.

L'étage redresseur 2 comprend en outre une virole métallique interne 5 et une virole métallique externe 9 entre lesquelles s'étend la couronne formée par l'assemblage des secteurs d'anneau 20 de l'étage distributeur 2. La virole métallique interne 5 est solidaire du carter 4.

La virole métallique interne 5 présente une portion annulaire s'étendant dans la direction axiale D_{A} et dans la direction circonférentielle D_{C} et comprenant à chaque extrémité 51 et 52 selon la direction axiale D_{A}, c'est-à-dire à une extrémité amont 51 et une extrémité aval 52, une patte d'accrochage amont 53 et une patte d'accrochage aval 54 s'étendant dans la direction radiale D_{R} vers l'extérieur, c'est-à-dire vers la plateforme intérieure 24, et plus particulièrement sa surface intérieure 24i, de la couronne de secteurs d'anneau 20, et vers la virole métallique externe 9.

La seconde portion 242 de la plateforme intérieure 24 du secteur d'anneau 20 présente, dans la direction axiale D_{A}, une extrémité amont 2421 et une extrémité aval 2422 présentant chacune une patte 243 et 244 s'étendant en saillie dans la direction radiale D_{R} vers l'intérieur.

La patte d'accrochage amont 53 présente une surface amont 530 et une surface aval 535, la surface aval 535 étant en appui contre l'extrémité amont 2421 de la seconde portion 242 de la plateforme intérieure 24 du secteur d'anneau 20, et plus particulièrement contre une surface amont 2430 de la patte amont 243 en saillie de l'extrémité amont 241 de la plateforme intérieure 24.

La virole métallique interne 5 comprend en outre une portion 55 en saillie dans la direction radiale D_{R} vers l'intérieur dans le prolongement de la patte d'accrochage aval 54. La portion en saillie 55 et la patte d'accrochage aval 54 sont dans le même plan radial défini par la direction radiale D_{R} et la direction circonférentielle D_{C}.

La patte d'accrochage aval 54 présente une surface amont 540 et une surface aval 545. La surface aval 545 est en appui contre la patte aval 244 formée à l'extrémité aval 242 de la plateforme intérieure 24 du secteur d'anneau 20.

Pour maintenir la plateforme intérieure 24 en position, la virole métallique interne 5 comprend en outre un anneau de verrouillage 56 qui peut être réalisé en une seule pièce ou être circonférentiellement sectorisé. L'anneau de verrouillage 56 comprend une surface plane s'étendant dans la direction radiale D_{R}. L'anneau de verrouillage 56 est fixé à l'aide de vis 57 et d'écrous 58, les vis 55 traversant l'anneau de verrouillage 56 et la portion en saillie 55 radialement vers l'intérieur de la virole métallique interne 5 via deux trous coaxiaux réalisés respectivement dans l'anneau de verrouillage 56 et dans la portion en saillie 55 radialement vers l'intérieur de la virole métallique interne 5.

La virole métallique interne 5 est configurée pour que le serrage de l'anneau de verrouillage 56 contre la portion en saillie 55 radialement vers l'intérieur de la virole métallique interne 5 via l'écrou 58 et la vis 57 permettent de prendre en étau la patte aval 244 en saillie radiale de l'extrémité aval 242 de la plateforme intérieure 24 du secteur d'anneau 20 entre deux mâchoires formées par la patte d'accrochage aval 54, d'une part, et l'anneau de verrouillage 56 d'autre part.

La plateforme intérieure 24, et plus particulièrement sa seconde portion 242, est ainsi prise en étau dans la direction axiale D_{A} à l'aide d'une pince axiale de la virole métallique interne de support 5 formée par la patte d'accrochage amont 53 et l'ensemble formé de la patte d'accrochage aval 54 et l'anneau de verrouillage 56. Cette configuration permet d'appliquer une contrainte axiale vers l'aval à chaque secteur d'anneau 20 pour maintenir axialement en position les secteurs d'anneau 20.

En outre, dans le premier mode de réalisation illustré sur les figures 1 à 4, la virole métallique interne 5 comprend un joint annulaire 70 conformé pour s'intercaler entre la patte d'accrochage aval 54 et la patte aval 244, entre la patte aval 244 et l'anneau de verrouillage 56, et entre la portion 55 en saillie radiale vers l'intérieur et l'anneau de verrouillage 56.

La virole métallique externe 9 comprend un ergot 90 de centrage pour chaque secteur d'anneau 20. L'ergot 90 se présente sous la forme d'un pion fixé, ou solidaire, de la virole métallique externe 9. La virole métallique externe 9 présente une surface intérieure 91 et une surface extérieure 92 selon la direction radiale D_{R}. L'ergot 90 s'étend depuis la surface intérieure 91 dans la direction radiale D_{R} vers l'intérieur.

La seconde portion 262 de la plateforme extérieure 26 du secteur d'anneau 20 comprend un premier orifice 263 configuré pour coopérer avec un ergot 90 de centrage de la virole métallique externe 9. Lorsque l'étage redresseur 2 est assemblé, la surface extérieure 26e de la plateforme extérieure 26 du secteur d'anneau 20 est en appui contre la surface intérieure 91 de la virole métallique externe 9 et l'ergot 90 de centrage traverse l'orifice correspondant de la virole métallique externe 9 et le premier orifice 263 de la seconde portion 262 de la plateforme extérieure 26.

En outre, pour solidariser le secteur d'anneau 20 à la virole métallique externe 9, la seconde portion 262 de la plateforme extérieure 26 du secteur d'anneau comprend un second orifice 264 destiné à coopérer avec une vis 95 traversant la virole métallique externe 9 au travers d'un premier orifice 93 de la virole métallique externe 9 et le second orifice 264 de la seconde portion 262 de la plateforme extérieure 26 du secteur d'anneau 20. La vis 95 coopère avec un écrou 96 pour solidariser la virole métallique externe 9 et le secteur d'anneau 20 ensemble.

La vis 95 et l'ergot 90 d'un même secteur d'anneau 20 sont disposés de part et d'autre de l'extension 280 de l'aube 28 du secteur d'anneau 20 pour améliorer le blocage du secteur d'anneau autour d'un axe radial. De même le second orifice 264 et le premier orifice 263 de la seconde portion 262 de la plateforme intérieure 26 sont disposés de part et d'autre de l'extension 280 de l'aube 28 du secteur d'anneau 20.

Comme cela est illustré sur la figure 2, chaque pale 28 possède un profil creux présentant un logement intérieur 285 s'étendant sur toute la hauteur de la pale 28, c'est-à-dire entre la plateforme intérieure 24 et la plateforme extérieure 26 du secteur d'anneau 20. La plateforme intérieure 24 de chaque secteur d'anneau 20 comprend un orifice 245 dont la forme correspond à la section du logement intérieur 285 dans le plan dans lequel s'étend la plateforme intérieure 24. De même, la plateforme extérieure 26 de chaque secteur d'anneau 20 comprend un orifice 265 dont la forme correspond à la section du logement intérieur 285 dans le plan dans lequel s'étend la plateforme intérieure 26. Les orifices 245 et 265 des plateformes intérieure 24 et extérieure 26 sont réalisés dans le prolongement du logement intérieur 285 de la pale 28.

Le logement intérieur 285 de la pale 28 et les orifices 245 et 265 des plateformes intérieure 24 et extérieure 26 peuvent être raccordés à un système de refroidissement délivrant un flux d'air de refroidissement depuis le carter 4 jusque dans la pale 28 et les plateformes intérieure 24 et extérieure 26.

Comme illustré sur les figures 1 à 4, la turbine 1 comprend en outre, pour chaque secteur d'anneau 20, un mât 6 s'étendant dans la direction radiale D_{R}. Le mât 6 comprend une tête de mât 61 en appui sur la surface extérieure 92 de la virole métallique externe 9, et une tige 62 s'étendant en saillie depuis la tête 61 dans la direction radiale D_{R} vers l'intérieur et configurée pour traverser la virole métallique externe 9, le logement intérieur 285 de la pale 28 et les orifices 245 et 265 des plateformes intérieure 24 et extérieure 26 étant alignés avec le logement intérieur 285 de la pale 28.

Le mât 6 comprend en outre une portion en saillie 63 s'étendant dans un plan transverse à la direction radiale D_{R} selon laquelle le mât 6 s'étend. Dans le mode de réalisation illustré, la portion en saillie 63 du mât 6 forme un épaulement annulaire s'étendant sur une portion du mât 6 destinée à être dans le logement intérieur 285 de la pale 28. La portion en saillie 63 du mât 6 forme une excroissance dont au moins une partie est en contact avec la pale 28 pour maintenir la pale 28 en position.

En outre, la virole interne de support 5 comprend des orifices 500 configurés pour recevoir les mâts 6. Le mât 6 permet de fournir un moyen de fixation du secteur 20 d'anneau en CMC par le haut, c'est-à-dire au carter 4, tout en minimisant le moment de flexion, dans la mesure où la longueur de flexion est diminuée de moitié environ de par le mât 6 traversant le secteur annulaire. Chaque secteur 20 d'anneau de l'étage distributeur est ainsi maintenu de façon déterministe, c'est-à-dire de manière à éviter que le secteur d'anneau 20 se mette à vibrer et en maîtrisant sa position, et cela tout en permettant au secteur d'anneau 20 de se déformer sous les effets de la température et de la pression entre autre indépendamment des pièces métalliques en interface.

Dans le cas où chaque secteur d'anneau comprenait plusieurs pales, la turbine comprendrait, au plus, un nombre de mâts correspondant pour chaque secteur d'anneau de distributeur.

Dans le mode de réalisation illustré sur les figures 1 à 4, la plateforme extérieure 26 du secteur d'anneau 20 comprend en outre un premier et un second renforts 266 et 267 disposés de part et d'autre de l'extension 280 de pale 28 et radialement entre la première portion 261 et la seconde portion 262 de la plateforme extérieure 26. Chacun des deux renforts 266 et 267 comprend une première paroi, respectivement 2662 et 2672, en appui contre une face radialement externe de la première portion 261 de la plateforme externe 26, c'est-à-dire la face de la première portion 261 en regard de la seconde portion 262 de la plateforme extérieure 26, et une seconde paroi, respectivement 2664 et 2674, en appui contre une face radialement interne de la seconde portion 262 de la plateforme externe 26, c'est-à-dire dire la face de la seconde portion 262 en regard de la première portion 261 de la plateforme extérieure 26.

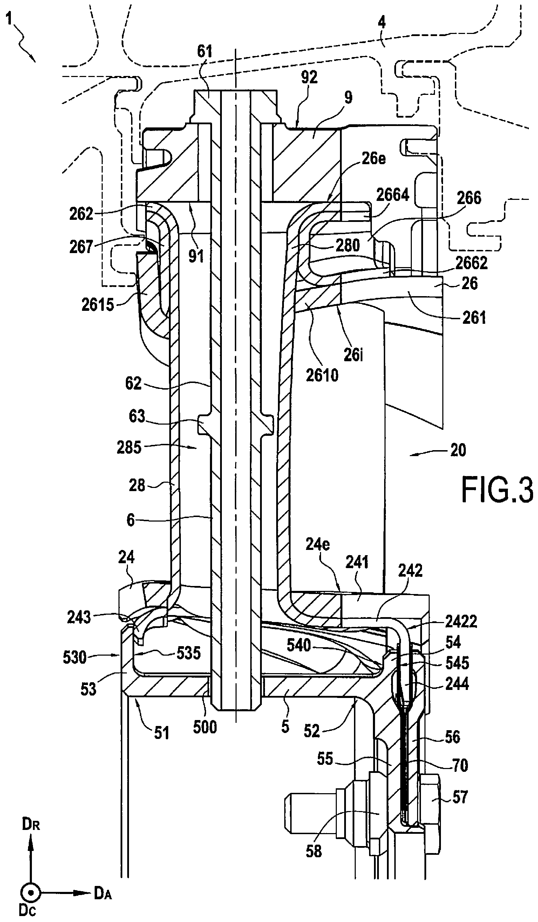

Chaque renfort 266 et 267 comprend en outre une paroi centrale, respectivement 2668 et 2678, s'étendant entre la première paroi, 2662 et 2672, et la seconde paroi 2664 et 2674 du renfort correspondant, 266, 267. Les parois centrales 2668 et 2678 s'étendent principalement dans la direction radiale D_{R}. Chaque renfort 266 et 267 présente ainsi une forme de U dans un plan de coupe comprenant la direction radiale D_{R} et la direction axiale D_{A} comme illustré sur la figure 3, le U étant orienté avec l'ouverture disposée dans la direction axiale D_{A}.

La seconde paroi 2664 du premier renfort 266 comprend un orifice 2666 destiné à être coaxial avec le premier orifice 263 de la seconde portion 262 de la plateforme extérieure 26 et traversé par l'ergot de centrage 90. La seconde paroi 2674 du second renfort 267 comprend un orifice 2676 destiné à être coaxial avec le second orifice 264 de la seconde portion 262 de la plateforme extérieure 26 et traversé par la vis 95, l'écrou 96 venant en appui sur une surface radialement interne de la seconde paroi 2674 du second renfort 267.

Les premier et second renforts 266 et 267 peuvent être rapportées lors de la phase de consolidation par voie gazeuse ou lors de l'opération de « Melt Infiltration » et ainsi solidaire du secteur d'anneau 20.

Dans le premier mode de réalisation illustré sur les figures 1 à 4, le secteur d'anneau 20 comprend en outre une encoche 29 réalisée dans la seconde portion 262 de la plateforme extérieure 26 et dans la seconde paroi 2664 du premier renfort 266, et la virole métallique externe 9 comprend, pour chaque secteur d'anneau 20, une butée 94 configurée pour coopérer avec l'encoche 29 de la plateforme extérieure 26 du secteur d'anneau 20. L'encoche 29 s'étend dans un plan comprenant la direction axiale D_{A} et la direction circonférentielle D_{C} et la butée 94 s'étend dans un plan comprenant la direction axiale D_{A} et la direction radiale D_{R}.

En outre, la première portion 261 de la plateforme extérieure 26 comprend une portion principale 2610 définissant une paroi externe de la veine 45 d'écoulement du flux gazeux F et une portion radiale 265 s'étendant en saillie dans la direction radiale D_{R} vers l'extérieur depuis une extrémité axiale amont 2611 de la première portion 261.

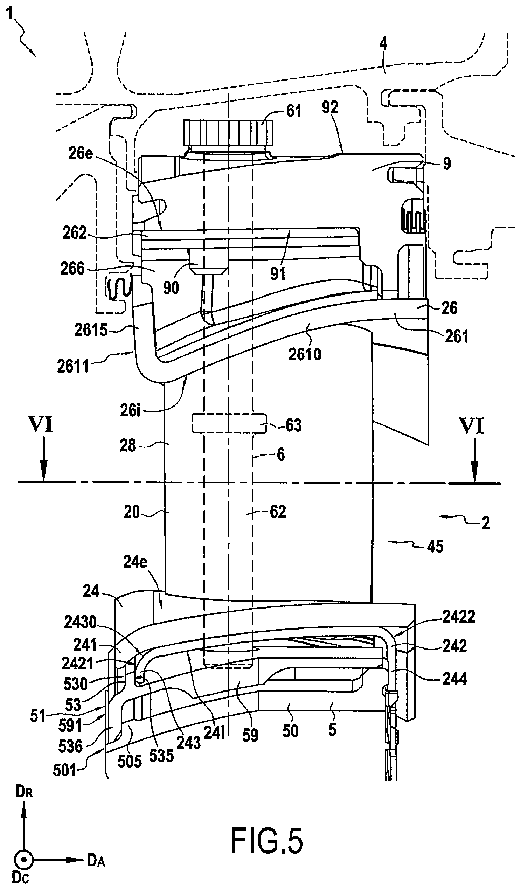

Sur la figure 5 est illustrée une vue schématique d'un secteur d'anneau d'un étage distributeur dans un plan défini par la direction radiale et la direction axiale de l'anneau selon un second mode de réalisation de l'invention.

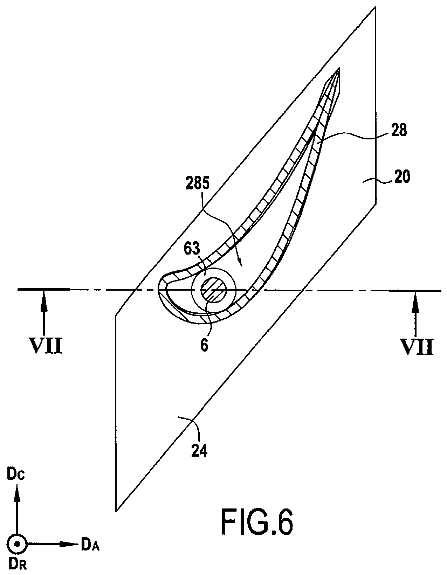

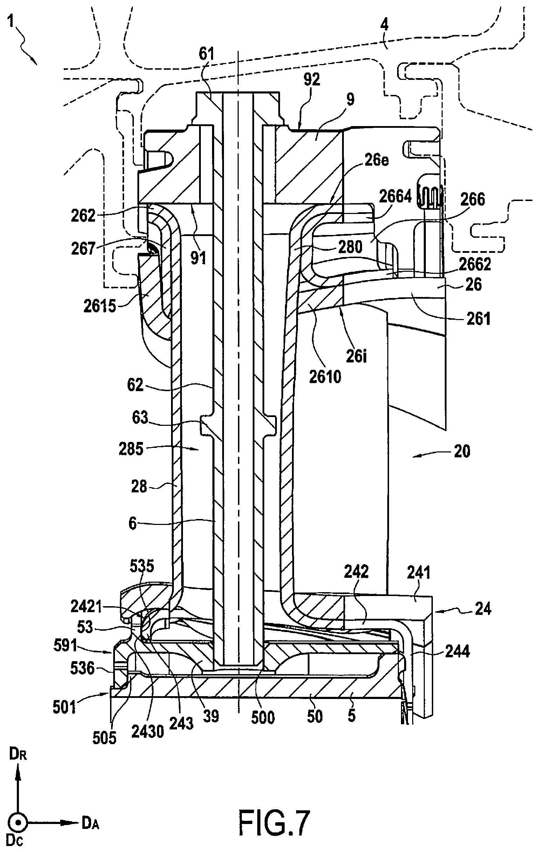

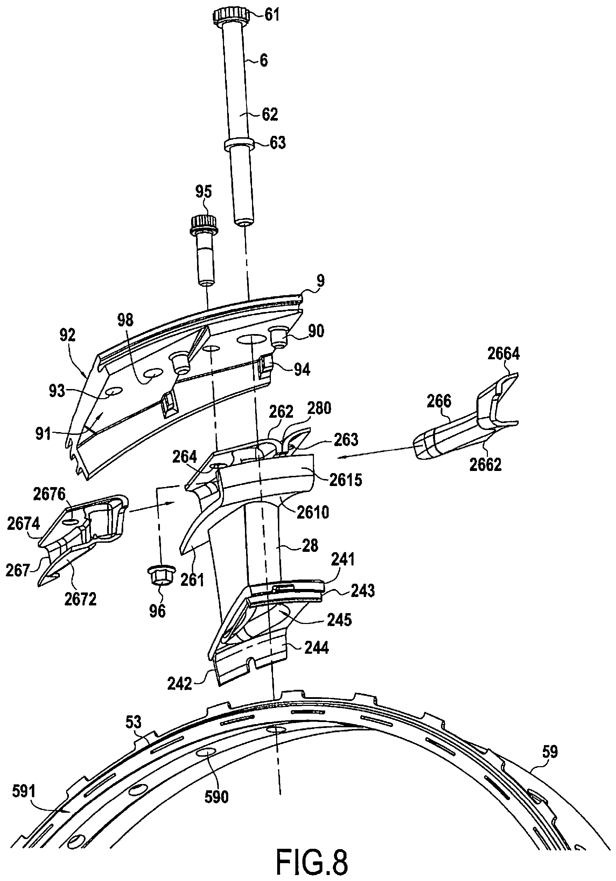

Les figures 6 à 8 présentent respectivement une vue en coupe dans un plan défini par la direction axiale et la direction circonférentielle, une vue schématique en coupe dans un plan défini par la direction radiale et la direction axiale et une vue schématique éclatée du secteur d'anneau de la figure 5.

Les éléments identiques au deuxième mode de réalisation illustré sur les figures 1 à 4 portent les mêmes références numériques.

Le second mode de réalisation diffère du premier mode de réalisation en ce que, la virole interne de support 5 comprend une couronne de support 50 et une couronne de maintien 59 disposé autour de la couronne de support 50.

La couronne de maintien 59 comprend des orifices 590 configurés pour recevoir les mâts 6. La couronne de maintien 59 comprend en outre une patte d'accrochage amont 53 s'étendant dans la direction radiale D_{R} vers l'extérieur depuis une extrémité axiale amont 591 de la couronne de maintien 59, c'est-à-dire vers la plateforme intérieure 24, et plus particulièrement sa surface intérieure 24i, de la couronne de secteurs d'anneau 20, et vers la virole métallique externe 9. La surface aval 535 de la patte d'accrochage amont 53 est en appui contre l'extrémité amont 2421 de la seconde portion 242 de la plateforme intérieure 24 du secteur d'anneau 20, et plus particulièrement contre une surface amont 2430 de la patte amont 243 en saillie de l'extrémité amont 241 de la plateforme intérieure 24.

La couronne de maintien 59 comprend également une bride radiale de maintien amont 536 s'étendant dans la direction radiale D_{R} vers l'intérieure depuis l'extrémité amont 591 de la couronne de maintien. La bride radiale de maintien amont 536 est en appui dans la direction axiale D_{A} contre un épaulement 505 s'étendant dans la direction radiale D_{R} vers l'extérieur depuis une extrémité axiale amont 501 de la couronne de support 50.

L'invention fournit ainsi une turbine de turbomachine comprenant un étage distributeur de turbine en CMC dont le montage est simplifié et adapté pour maintenir les secteurs d'anneau de façon déterministe tout en permettant au secteur d'anneau de se déformer indépendamment des pièces métalliques en interface.

## Revendications

1. Turbine (1) de turbomachine comprenant un carter (4) et un étage distributeur de turbine (2), l'étage distributeur (2) de turbine (1) comportant une virole externe de support (9) en métal et solidaire du carter (4), une virole interne de support (5) en métal, et une pluralité de secteurs (20) d'anneau en matériau composite à matrice céramique formant une couronne et s'étendant entre la virole externe de support (9) et la virole interne de support (5), les secteurs (20) d'anneau définissant une direction axiale (D_{A}) et une direction radiale (D_{R}), et chaque secteur (20) d'anneau ayant une plateforme intérieure (24) et une plateforme extérieure (26) qui délimitent une veine (45) d'écoulement d'un fluide (F), et au moins une pale (28) s'étendant entre la plateforme extérieure (26) et la plateforme intérieure (24) et fixée à celles-ci, la plateforme extérieure (26) de chaque secteur (20) comprenant une première portion (261) dotée d'une face interne (26i) qui délimite la veine (45) d'écoulement de fluide (F), et une seconde portion (262) radialement distante et externe à la première portion (261), la seconde portion (262) de la plateforme extérieure (26) étant fixée à la virole externe de support (9), la plateforme intérieure (24) comprenant une première patte (243) s'étendant selon la direction radiale (D_{R}) en saillie vers l'intérieur depuis une extrémité axiale amont (241) de la plateforme intérieure (24), et la virole interne de support (5) comprenant un épaulement (53) s'étendant en saillie dans la direction radiale (D_{R}) vers l'extérieur, l'épaulement étant positionné en amont de la première patte (243) et en butée dans la direction axiale (D_{A}) contre ladite première patte (243)
**caractérisé en ce qu'**elle comprend au moins un renfort (266, 267) disposé selon la direction radiale (D_{R}) entre la première portion (261) et la seconde portion (262) de la plateforme extérieure (26), ledit au moins un renfort (266, 267) comprenant une première paroi (2662, 2672) en appui contre une face radialement externe de la première portion (261) de la plateforme extérieure (26) et une seconde paroi (2664, 2674) en appui contre une face radialement interne de la seconde portion (261) de la plateforme extérieure (26), ledit au moins un renfort (266, 267) étant fixé à la virole externe de support (9) avec la seconde portion (262) de la plateforme extérieure (26).

2. Turbine (1) selon la revendication 1, dans laquelle la seconde portion (262) de la plateforme extérieure (26) est fixée à la virole externe de support (9) à l'aide d'au moins un ensemble comprenant une vis (95) et un écrou, la vis (95) traversant la plateforme extérieure (26) du secteur (20) et la virole externe de support (9).

3. Turbine (1) selon l'une des revendications 1 ou 2, dans laquelle la seconde portion (262) de la plateforme extérieure (26) de chaque secteur (20) comprend au moins un élément de butée en rotation (263, 29) et la virole externe de support (9) comprend au moins un élément complémentaire de butée en rotation (90, 94) configuré pour coopérer avec un élément de butée en rotation (263, 29) de la plateforme extérieure (26).

4. Turbine (1) selon l'une des revendications 1 à 3, dans laquelle la première portion (261) de la plateforme extérieure (26) comprend une partie (2615) s'étendant en saillie vers l'extérieur dans la direction radiale (D_{R}) depuis une extrémité amont (2611) de la plateforme extérieure (26).

5. Turbine (1) selon l'une des revendications 1 à 4, dans laquelle ladite au moins une pale (28) de chaque secteur (20) d'anneau présente un profil creux définissant un logement interne (285) s'étendant entre la plateforme intérieure (24) et la plateforme extérieure (26), les plateformes intérieure et extérieure (24, 26) de chaque secteur (20) d'anneau présentent chacune un orifice (245, 265) communiquant avec ledit logement interne (285) de ladite au moins une pale (28), et chaque secteur (20) d'anneau de l'étage distributeur (2) comprend au moins un mât (6) traversant lesdits orifices (245, 265) des plateformes (24, 26) et le logement interne (285) de ladite au moins une pale (28), ledit mât (6) étant fixé audit carter (4) et en liaison avec ledit secteur (20) et ladite virole interne de support (5).

6. Turbine (1) selon la revendication 5, dans lequel le mât (6) comprend au moins une portion (63) en saillie dans la direction axiale en liaison avec la pale (28) pour maintenir la pale (28) en position.

7. Turbine (1) selon l'une des revendications 1 à 6, dans laquelle la plateforme intérieure (24) de chaque secteur (20) comprend en outre une seconde patte radiale (244) s'étendant en saillie dans la direction radiale (D_{R}) vers l'intérieur depuis une extrémité aval de la plateforme intérieure (24), la plateforme intérieure (24) étant fixée à la virole interne de support (5) par pincement des première et seconde pattes radiales (243, 244) de la plateforme intérieure (24) dans la direction axiale (D_{A}) entre ledit épaulement (51) de la virole interne de support (5) et une pince comportant deux mâchoires (54, 56) s'étendant dans la direction radiale (D_{R}) vers l'extérieur et maintenues l'une vers l'autre contre la seconde patte radiale (244) de la plateforme intérieure (24).

8. Turbine (1) selon l'une des revendications 5 ou 6, dans laquelle la virole interne de support (5) comprend une couronne perforée (59) comportant des orifices (590) de réception d'une extrémité du mât (6), et une bague de maintien (50) sur laquelle est montée la couronne (59).

9. Turbine (1) selon l'une des revendications 5 à 8, dans laquelle le mât (6) est creux et comprend des perforations sur toute sa hauteur pour délivrer un flux d'air de refroidissement, le flux d'air étant acheminé à l'intérieur du mât (6) depuis le carter (4).

10. Turbine (1) selon l'une des revendications 1 à 9, dans laquelle la seconde portion (262) de la plateforme extérieure (26), la pale (28) et la première patte (243) de la plateforme intérieure (24) sont formées en une seule et même pièce de tissage de matériau composite à matrice céramique.

11. Turbine (1) selon l'une des revendications 1 à 10, dans laquelle chaque renfort (266, 267) comprend en outre une paroi centrale (2668, 2678) s'étendant entre la première paroi (2662, 2672) et la seconde paroi (2664, 2674) du renfort correspondant (266, 267), dans la direction radiale (D_{R}), chaque renfort (266, 267) présentant une forme en U dans un plan de coupe comprenant la direction radiale (D_{R}) et la direction axiale (D_{A}) avec une ouverture disposée selon la direction axiale (D_{A}).

12. Turbomachine comprenant au moins une turbine (1) de turbomachine selon l'une des revendications 1 à 11.

## Patentansprüche

1. Turbine (1) für eine Turbomaschine, umfassend ein Gehäuse (4) und eine Leitschaufelstufe (2) der Turbine, wobei die Leitschaufelstufe (2) der Turbine (1) eine äußere Stützhülse (9) aus Metall, die mit dem Gehäuse (4) fest verbunden ist, eine innere Stützhülse (5) aus Metall und mehrere Ringsektoren (20) aus Keramikmatrixverbundmaterial, die einen Kranz bilden und sich zwischen der äußeren Stützhülse (9) und der inneren Stützhülse (5) erstrecken, beinhaltet, wobei die Ringsektoren (20) eine axiale Richtung (D_{A}) und eine radiale Richtung (D_{R}) definieren und jeder Ringsektor (20) eine innere Plattform (24) und eine äußere Plattform (26), die einen Strömungskanal (45) eines Fluids (F) begrenzen, und mindestens eine Schaufel (28), die sich zwischen der äußeren Plattform (26) und der inneren Plattform (24) erstreckt und daran befestigt ist, aufweist, wobei die äußere Plattform (26) jedes Sektors (20) einen ersten Abschnitt (261), der mit einer Innenfläche (26i) versehen ist, welche den Strömungskanal (45) des Fluids (F) begrenzt, und einen zweiten Abschnitt (262) radial entfernt und außerhalb des ersten Abschnitts (261) umfasst, wobei der zweite Abschnitt (262) der äußeren Plattform (26) an der äußeren Stützhülse (9) befestigt ist, die innere Plattform (24) einen ersten Schenkel (243) umfasst, der sich entlang der radialen Richtung (D_{R}) vorstehend nach innen von einem stromaufwärtigen axialen Ende (241) der inneren Plattform (24) erstreckt und die innere Stützhülse (5) eine Schulter (53) umfasst, die sich vorstehend in der radialen Richtung (D_{R}) nach außen erstreckt, wobei die Schulter stromaufwärts des ersten Schenkels (243) und anliegend in der axialen Richtung (D_{A}) an dem ersten Schenkel (243) positioniert ist,
**dadurch gekennzeichnet, dass** sie mindestens eine Verstärkung (266, 267) umfasst, die entlang der radialen Richtung (D_{R}) zwischen dem ersten Abschnitt (261) und dem zweiten Abschnitt (262) der äußeren Plattform (26) angeordnet ist, wobei die mindestens eine Verstärkung (266, 267) eine erste Wand (2662, 2672) in Anlage an einer radial äußeren Fläche des ersten Teils (261) der äußeren Plattform (26) und eine zweite Wand (2664, 2674) in Anlage an einer radial inneren Fläche des zweiten Abschnitts (261) der äußeren Plattform (26) umfasst, wobei die mindestens eine Verstärkung (266, 267) an der äußeren Stützhülse (9) mit dem zweiten Abschnitt (262) der äußeren Plattform (26) befestigt ist.

2. Turbine (1) nach Anspruch 1, wobei der zweite Abschnitt (262) der äußeren Plattform (26) an der äußeren Stützhülse (9) mit Hilfe von mindestens einer Baugruppe befestigt ist, die eine Schraube (95) und eine Mutter umfasst, wobei die Schraube (95) die äußere Plattform (26) des Sektors (20) und die äußere Stützhülse (9) durchläuft.

3. Turbine (1) nach einem der Ansprüche 1 oder 2, wobei der zweite Abschnitt (262) der äußeren Plattform (26) jedes Sektors (20) mindestens ein Drehanschlagselement (263, 29) umfasst und die äußere Stützhülse (9) mindestens ein komplementäres Drehanschlagselement (90, 94) umfasst, das dazu ausgestaltet ist, mit einem Drehanschlagselement (263, 29) der äußeren Plattform (26) zusammenzuwirken.

4. Turbine (1) nach einem der Ansprüche 1 bis 3, wobei der erste Abschnitt (261) der äußeren Plattform (26) einen Teil (2615) umfasst, der sich vorstehend nach außen in der radialen Richtung (D_{R}) von einem stromaufwärtigen Ende (2611) der äußeren Plattform (26) erstreckt.

5. Turbine (1) nach einem der Ansprüche 1 bis 4, wobei die mindestens eine Schaufel (28) jedes Ringsektors (20) ein Hohlprofil aufweist, das eine innere Aufnahme (285) definiert, die sich zwischen der inneren Plattform (24) und der äußeren Plattform (26) erstreckt, wobei die innere und die äußere Plattform (24, 26) jedes Ringsektors (20) jeweils eine Öffnung (245, 265) aufweisen, die mit der inneren Aufnahme (285) der mindestens einen Schaufel (28) kommuniziert, und jeder Ringsektor (20) der Leitschaufelstufe (2) mindestens eine Stange (6) umfasst, welche die Öffnungen (245, 265) der Plattformen (24, 26) und die innere Aufnahme (285) der mindestens einen Schaufel (28) durchläuft, wobei die Stange (6) an dem Gehäuse (4) befestigt und in Verbindung mit dem Sektor (20) und der inneren Stützhülse (5) steht.

6. Turbine (1) nach Anspruch 5, wobei die Stange (6) mindestens einen Abschnitt (63) vorstehend in der axialen Richtung in Verbindung mit der Schaufel (28) umfasst, um die Schaufel (28) in Position zu halten.

7. Turbine (1) nach einem der Ansprüche 1 bis 6, wobei die innere Plattform (24) jedes Sektors (20) ferner einen zweiten radialen Schenkel (244) umfasst, der sich vorstehend in der radialen Richtung (D_{R}) nach innen von einem stromabwärtigen Ende der inneren Plattform (24) erstreckt, wobei die innere Plattform (24) an der inneren Stützhülse (5) durch Festklemmen des ersten und des zweiten radialen Schenkels (243, 244) der inneren Plattform (24) in der axialen Richtung (D_{A}) zwischen der Schulter (51) der inneren Stützhülse (5) und einer Klemme befestigt ist, die zwei Spannbacken (54, 56) beinhaltet, die sich in der radialen Richtung (D_{R}) nach außen erstrecken und gegenseitig gegen den zweiten radialen Schenkel (244) der inneren Plattform (24) gehalten werden.

8. Turbine (1) nach einem der Ansprüche 5 oder 6, wobei die innere Stützhülse (5) einen perforierten Kranz (59), der Öffnungen (590) zur Aufnahme eines Endes der Stange (6) beinhaltet, und einen Haltering (50), auf dem der Kranz (59) montiert ist, umfasst.

9. Turbine (1) nach einem der Ansprüche 5 bis 8, wobei die Stange (6) hohl ist und Perforationen über ihre gesamte Höhe umfasst, um einen Kälteluftstrom abzugeben, wobei der Luftstrom in das Innere der Stange (6) von dem Gehäuse (4) geleitet wird.

10. Turbine (1) nach einem der Ansprüche 1 bis 9, wobei der zweite Abschnitt (262) der äußeren Plattform (26), die Schaufel (28) und der erste Schenkel (243) der inneren Plattform (24) aus einem einzigen und selben Gewebestück aus Keramikmatrixverbundmaterial gebildet sind.

11. Turbine (1) nach einem der Ansprüche 1 bis 10, wobei jede Verstärkung (266, 267) ferner eine Mittelwand (2668, 2678) umfasst, die sich zwischen der ersten Wand (2662, 2672) und der zweiten Wand (2664, 2674) der entsprechenden Verstärkung (266, 267) in der radialen Richtung (D_{R}) erstreckt, wobei jede Verstärkung (266, 267) eine U-Form in einer Schnittebene aufweist, welche die radiale Richtung (D_{R}) und die axiale Richtung (D_{A}) umfasst, wobei eine Öffnung entlang der axialen Richtung (D_{A}) angeordnet ist.

12. Turbomaschine, umfassend mindestens eine Turbine (1) für eine Turbomaschine nach einem der Ansprüche 1 bis 11.

## Claims

1. A turbine (1) of a turbo engine comprising a casing (4) and a turbine nozzle stage (2), the turbine (1) nozzle stage (2) including an outer support shroud (9) made of metal and secured to the casing (4), an inner support shroud (5) made of metal, and a plurality of ring sectors (20) made of ceramic-matrix composite material forming a crown and extending between the outer support shroud (9) and the inner support shroud (5), the ring sectors (20) defining an axial direction (D_{A}) and a radial direction (D_{R}), and each ring sector (20) having an internal platform (24) and an external platform (26) which delimit a fluid (F) flowpath (45), and at least one blade (28) extending between the external platform (26) and the internal platform (24) and fixed thereto, the external platform (26) of each sector (20) comprising a first portion (261) equipped with an inner face (26i) which delimits the fluid (F) flowpath (45), and a second portion (262) radially distant and external to the first portion (261), the second portion (262) of the external platform (26) being fixed to the outer support shroud (9), the internal platform (24) comprising a first tab (243) protruding along the radial direction (D_{R}) inwardly from an upstream axial end (241) of the internal platform (24), and the inner support shroud (5) comprising a shoulder (53) protruding in the radial direction (D_{R}) outwardly, the shoulder being positioned upstream of the first tab (243) and in abutment in the axial direction (D_{A}) against said first tab (243), **characterized in that** it comprises at least one reinforcement (266, 267) disposed along the radial direction (D_{R}) between the first portion (261) and the second portion (262) of the external platform (26), said at least one reinforcement (266, 267) comprising a first wall (2662, 2672) bearing against a radially outer face of the first portion (261) of the external platform (26) and a second wall (2664, 2674) bearing against a radially inner face of the second portion (261) of the external platform (26), said at least one reinforcement (266, 267) being fixed to the outer support shroud (9) with the second portion (262) of the external platform (26).

2. The turbine (1) according to claim 1, wherein the second portion (262) of the external platform (26) is fixed to the outer support shroud (9) using at least one assembly comprising a screw (95) and a nut, the screw (95) passing through the external platform (26) of the sector (20) and the outer support shroud (9).

3. The turbine (1) according to any of claims 1 or 2, wherein the second portion (262) of the external platform (26) of each sector (20) comprises at least one rotational abutment element (263, 29) and the outer support shroud (9) comprises at least one complementary rotational abutment element (90, 94) configured to cooperate with a rotational abutment element (263, 29) of the external platform (26).

4. The turbine (1) according to any of claims 1 to 3, wherein the first portion (261) of the external platform (26) comprises a portion (2615) protruding outwardly in the radial direction (D_{R}) from an upstream end (2611) of the external platform (26).

5. The turbine (1) according to any of claims 1 to 4, wherein said at least one blade (28) of each ring sector (20) has a hollow profile defining an inner housing (285) extending between the internal platform (24) and the external platform (26), the internal and external platforms (24, 26) of each ring sector (20) each have an orifice (245, 265) communicating with said inner housing (285) of said at least one blade (28), and each ring sector (20) of the nozzle stage (2) comprises at least one mast (6) passing through said orifices (245, 265) of the platforms (24, 26) and the inner housing (285) of said at least one blade (28), said mast (6) being fixed to said casing (4) and in connection with said sector (20) and said inner support shroud (5).

6. The turbine (1) according to claim 5, wherein the mast (6) comprises at least one portion (63) protruding in the axial direction in connection with the blade (28) to hold the blade (28) in position.

7. The turbine (1) according to any of claims 1 to 6, wherein the internal platform (24) of each sector (20) further comprises a second radial tab (244) protruding in the radial direction (D_{R}) inwardly from a downstream end of the internal platform (24), the internal platform (24) being fixed to the inner support shroud (5) by pinching of the first and second radial tabs (243, 244) of the internal platform (24) in the axial direction (D_{A}) between said shoulder (51) of the inner support shroud (5) and a clamp including two jaws (54, 56) extending in the radial direction (D_{R}) outwardly and held towards each other against the second radial tab (244) of the internal platform (24).

8. The turbine (1) according to any of claims 5 or 6, wherein the inner support shroud (5) comprises a perforated crown (59) including orifices (590) for receiving one end of the mast (6), and a retaining ring (50) on which the crown (59) is mounted.

9. The turbine (1) according to any of claims 5 to 8, wherein the mast (6) is hollow and comprises perforations over its entire height to deliver a cooling air stream, the air stream being conveyed inside the mast (6) from the casing (4).

10. The turbine (1) according to any of claims 1 to 9, wherein the second portion (262) of the external platform (26), the blade (28) and the first tab (243) of the internal platform (24) are formed in a single and same weaving part of ceramic-matrix composite material.

11. The turbine (1) according to any of claims 1 to 10, wherein each reinforcement (266, 267) further comprises a central wall (2668, 2678) extending between the first wall (2662, 2672) and the second wall (2664, 2674) of the corresponding reinforcement (266, 267), in the radial direction (D_{R}), each reinforcement (266, 267) having a U shape in a section plane comprising the radial direction (D_{R}) and the axial direction (D_{A}) with an opening disposed in the axial direction (D_{A}).

12. A turbo engine comprising at least one turbine (1) of a turbo engine according to any of claims 1 to 11.
